# EUROPEAN PATENT SPECIFICATION

(11) **EP 0 870 179 B1**
(45) Date of publication and mention of the grant of the patent: **14.08.2002**
(21) Application number: 96938094.8
(22) Date of filing: 05.11.1996
(51) Int. Cl.: G01G 19/44

(54) **SCALES FOR WEIGHING PEOPLE**
PERSONENWAAGE
PESE-PERSONNE

(30) Priority: 01.12.1995 IT PD950231
(43) Date of publication of application: 14.10.1998
(73) Proprietor: LAICA S.r.L., 36020 Barbarano Vicentino (IT)
(72) Inventor: MORETTO, Leonida, I-36100 Vicenza (IT)
(74) Representative: Cantaluppi, Stefano
(86) International application number: EP9604825
(87) International publication number: WO9721078

(56) References cited:
- EP-A- 0 674 159
- EP-A- 0 749 718
- GB-A- 1 173 299
- US-A- 4 452 326
- US-A- 4 458 771

## Description

### Technical field

The present invention relates to scales for weighing people, comprising:
- a system of levers for supporting a platform to which the load to be weighed is applied,
- the lever system having principal levers and auxiliary levers which pivot on the same support and which act respectively on a device for displaying the load being weighed and on the principal levers for the support of the platform,
- the principal and auxiliary levers being connected to one another by means of fastening means and counter-means.

### Background Art

In such scales, the platform is generally supported by a pair of principal levers which pivot on the support and which act on the display device detecting the load, and by a pair of auxiliary levers, each of which in turn pivots on the support and is connected to a corresponding principal lever for receiving the load applied to the platform and transferring it to the detecting device.

A known solution for connecting the auxiliary levers and the principal levers to one another uses a fastening ring slipped onto the principal lever in order to support one end of the corresponding

A direct connection is known from EP-A-674 159 but the pair of principal levers si connected to a spring by screwing.

The problem on which the present invention is based is to provide scales which are constructed and designed to be suitable for automation.

### Disclosure of the Invention

This problem is solved by the invention by means of scales of claim 1.

### Brief Description of Drawings

The characteristics and advantages of the invention will become clear from the following detailed description of a preferred embodiment illustrated by way of non-limiting example with reference to the appended drawings in which:
- Figure 1 is a perspective view of scales manufactured in accordance with the present invention;
- Figure 2 is a perspective view of a detail of Figure 1;

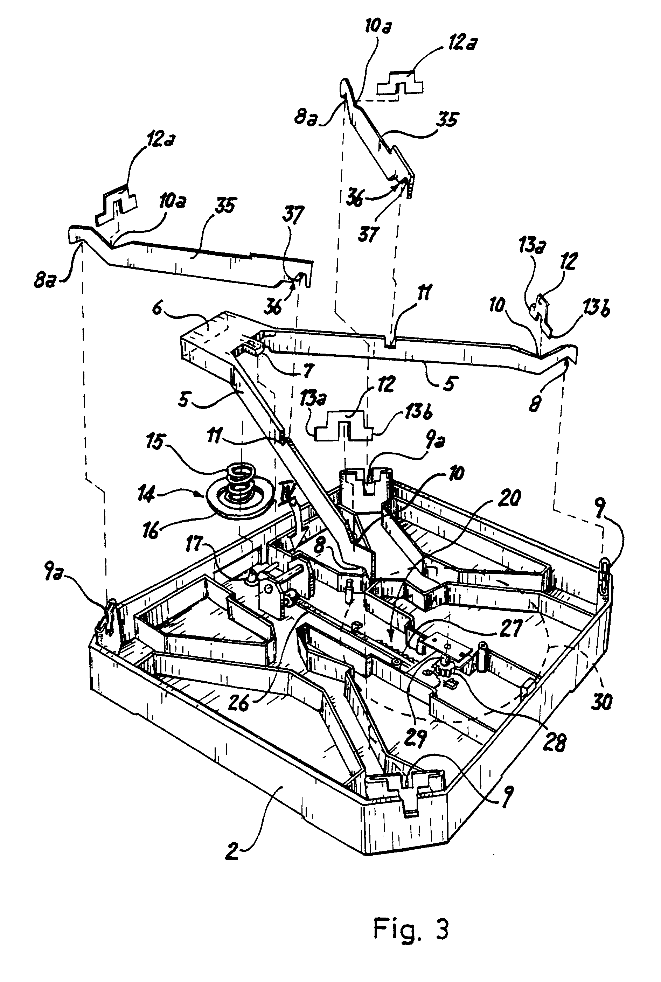

- Figure 3 is an exploded perspective view of the detail of Figure 1 during assembly;

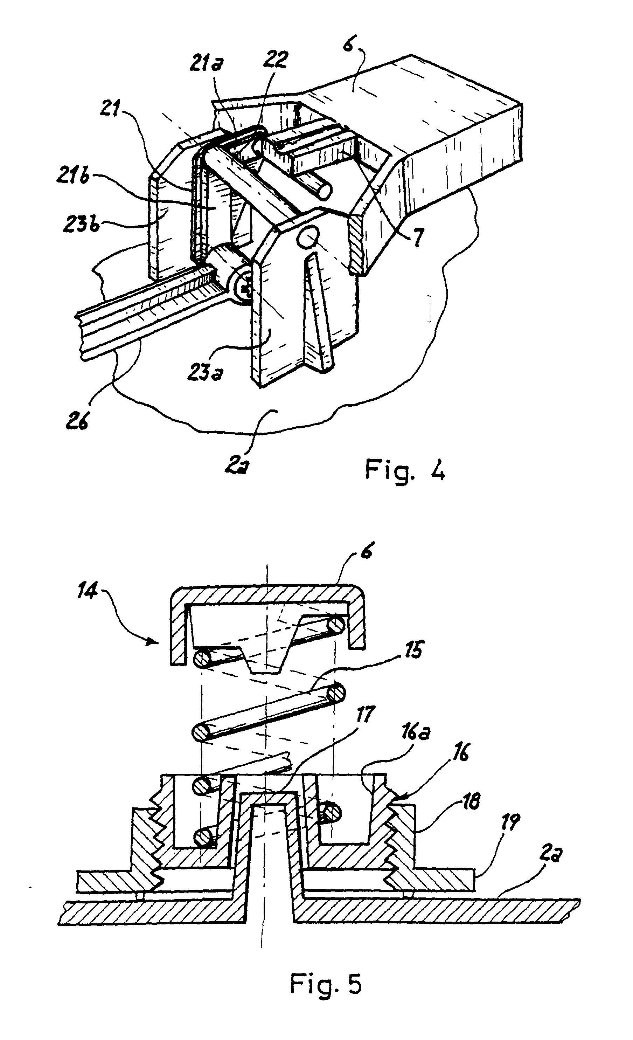

- Figure 4 is a perspective view, on an enlarged scale, of the detail indicated by arrow IV of Figure 3; and
- Figure 5 is an enlarged sectional view along the line V-V of Figure 2.

### Best Mode of Carrying out the Invention

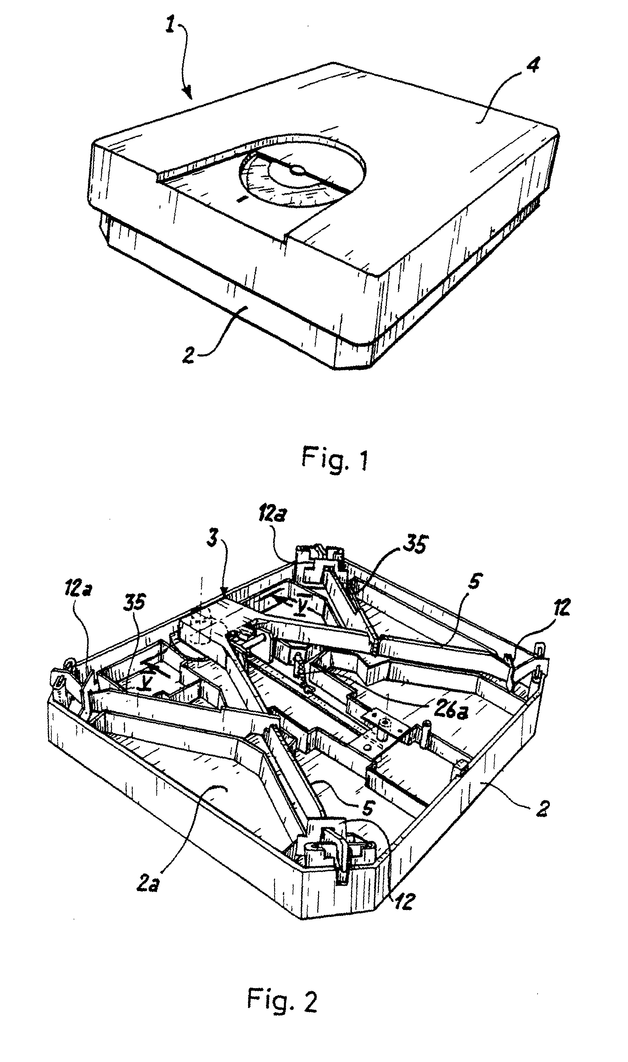

In Figure 1, scales for weighing people are generally indicated 1 and comprise a support 2 having a polygonal base 2a which carries a system of levers 3 for supporting a platform 4 to which the load to be weighed is applied.

The lever system 3 comprises a pair of principal levers 5 diverging in a V-shape from the same plate-like body 6 which is preferably formed in one piece with the levers 5. The plate-like body 6 has an extension 7 in the direction of the bisector between the levers 5.

At each free end, in the region opposite the body 6, the principal levers 5 have a respective first V-shaped cutaway portion 8 which rests on a respective knife-edge formation 9 mounted on the support 2 and constituting the fulcrum for the corresponding principal lever.

Starting from the free end, a second cutaway portion 10 opposite to the first is formed on each lever 5 and a respective notch 11 is formed in a substantially central position.

A second knife-edge 12 rests in each of the second cutaway portions 10. Each second knife-edge 12 is omega-shaped with two side arms 13a,b arranged to receive and support corresponding feet (not shown) of the platform 4.

The plate-like body 6 rests on a resiliently yielding support 14 which comprises a helical spring 15 and a spring-holder 16. The latter comprises a cup-shaped body 16a which is guided on a pin 17 projecting from the base 2a of the support 2 and which has, externally, a thread onto which a sleeve 18 is screwed in an adjustable manner. The sleeve 18 has a flange in the form of a disc 19 which normally rests on the base 2a. The disc 19 is accessible from the outside of the scales in order to vary the screwing of the cup-shaped body 16a into the sleeve 18 and consequently to regulate the calibration of the scales 1.

The principal levers 5 act by way of the extension 7 on a device displaying the load being weighed. This device, generally indicated 20, comprises, in addition to the support 14, a linkage 21 including a first and a second arm 21a,b which are at right-angles to one another, and is articulated centrally, by means of a pin 22, to two plates 23a,b projecting from the base 2a. The extension 7 is connected to, by simply resting on, the free end of the arm 21a and a rod 26 is connected to the free end of the arm 21b by hinging.

A return spring indicated 26a acts between the support 2 and the rod 26.

A rack 27 is formed on the rod 26 and meshes with a pinion 28 which, in turn, is keyed onto a shaft 29 on which an indicator disc 30 graduated according to the value of the load being weighed is also secured.

The lever system 3 also comprises a pair of auxiliary levers which are each indicated 35.

Each lever 35 has, at one end, a first cutaway portion 8a resting on a respective knife-edge formation 9a of the support 2, and a second, opposite cutaway portion 10a. Respective knife-edges 12a, which have a structure identical to that of the knife-edges 12 and which are intended to bear corresponding feet of the platform 4, rest on the cutaway portions 10a.

A recess 36, at the base of which another knife-edge formation 37 is defined, is formed at the opposite end of each auxiliary lever 35. Each auxiliary lever 35 is connected to the corresponding principal lever 5 by directly resting the knife-edge formation 37 in the notch 11. Owing to this feature, the knife-edge formation 37 and the notch 11 are also indicated in the claims as fastening means and counter-means.

Thus, the assembly of the lever system 3 is achieved by mounting the principal levers 5 on the support 2 and resting the corresponding auxiliary lever 35 directly on each of the principal levers 5. Mounting is therefore effected directly from above without requiring any pre-assembly of the lever system 3, for example without providing fastening elements interposed between principal and auxiliary levers.

It will also be appreciated that, in accordance with the invention, the principal levers 5 are in their turn mounted on the support 2 by resting directly on the respective knife-edge formations 9 and on the spring 15. Analogously, the knife-edges 12, 12a bear directly from above once the lever system 3 has been arranged on the support 2.

## Claims

1. Scales for weighing people, comprising:
- a system of levers (3) for supporting a platform (4) to which the load to be weighed is applied,
- the lever system (3) having principal levers (5) and auxiliary levers (35) which pivot on the same support (2) and which act respectively on a device (20) for displaying the load being weighed and on the principal levers (5) for the support of the platform (4),
- the principal levers (5) being at one end connected to a resiliently yielding support (14),
- the principal (5) and auxiliary (35) levers being connected to one another by way of fastening means and counter-means, the fastening means and counter-means being such that each of the auxiliary levers (35) is connected directly to, by simply resting on, the corresponding principal lever (5), **characterised in that** the principal levers (5) are directly resting on the resiliently yielding support (14).

2. Scales according to claim 1, wherein the fastening means and counter-means comprise a knife-edge formation (37) on each of the auxiliary levers (35) and, co-operating therewith, a notch (11) on each of the principal levers (5).

3. Scales according to claim 2, wherein the auxiliary lever (35) is provided with a recess (36) which can be caused to engage in the notch (11) in order to maintain the auxiliary lever (35) in a predetermined position on the corresponding principal lever (5) when the recess (36) and the notch (11) are mutually engaged.

4. Scales according to claim 2, wherein the fastening means and counter-means (37, 11) are provided respectively in a substantially central position on each of the principal levers (5) and at one end of each of the auxiliary levers (35).

## Patentansprüche

1. Personenwaage mit einem Hebelsystem (3) zum Halten einer Wiegeplatte (4), auf die das zu wiegende Gewicht gebracht wird, wobei das Hebelsystem (3) Haupthebel (5) und Nebenhebel (35) besitzt, die am selben Träger (2) schwenkbar sind und die auf eine Vorrichtung (20) zum Anzeigen des zu wiegenden Gewichtes bzw. auf die Haupthebel (5) zum Halten der Wiegeplatte (4) wirken, wobei die Haupthebel (5) an einem Ende mit einem federnd nachgebenden Halter (14) verbunden sind und wobei die Haupthebel (5) und die Nebenhebel (35) über Befestigungsmittel und - Gegenmittel miteinander verbunden sind, die derart sind, dass jeder der Nebenhebel (35) mit dem betreffenden Haupthebel (5) unmittelbar durch einfaches Aufliegen verbunden ist, **dadurch gekennzeichnet, dass** die Haupthebel (5) auf dem federnd nachgebenden Halter (14) unmittelbar ruhen.

2. Waage nach Anspruch 1, **dadurch gekennzeichnet, dass** die Befestigungsmittel and - Gegenmittel eine Waageschneiden-Ausbildung (37) auf jedem der Nebenhebel (35) und eine damit zusammenwirkende Kerbe (11) auf jedem der Haupthebel (5) besitzen.

3. Waage nach Anspruch 2, **dadurch gekennzeichnet, dass** der Nebenhebel (35) mit einem Einschnitt (36) versehen ist, der in die Kerbe (11) eingreifen kann, um den Nebenhebel (35) in einer vorbestimmten Position auf dem betreffenden Haupthebel (5) dann zu halten, wenn der Einschnitt (36) und die Kerbe (11) miteinander in Verbindung stehen.

4. Waage nach Anspruch 2, **dadurch gekennzeichnet, dass** die Befestigungsmittel und - Gegenmittel (37, 11) in einer im wesentlichen mittigen Lage an jedem der Haupthebel (5) bzw. an einem Ende jedes der Nebenhebel (35) vorgesehen sind.

## Revendications

1. Pèse-personne, comprenant :
un système de leviers (3) destiné à supporter une plate-forme (4) sur laquelle est appliquée la charge à peser,
le système de leviers (3) possédant des leviers principaux (5) et des leviers auxiliaires (35) qui pivotent sur le même support (2) et qui agissent respectivement sur un dispositif (20) d'affichage de la charge pesée et sur les leviers principaux (5) de support de la plate-forme (4),
les leviers principaux (5) étant raccordés à une première extrémité à un support flexible élastiquement (14),
les leviers principaux (5) et auxiliaires (35) étant raccordés mutuellement par un dispositif de fixation et un dispositif antagoniste, le dispositif de fixation et le dispositif antagoniste étant tels que chacun des leviers auxiliaires (35) est directement raccordé au levier principal correspondant (5) en reposant simplement sur celui-ci, **caractérisé en ce que** les leviers principaux (5) sont directement en appui sur le support flexible élastiquement (14).

2. Pèse-personne selon la revendication 1, dans lequel le dispositif de fixation et le dispositif antagoniste comportent un organe conformé (37) à lame de couteau sur chacun des leviers auxiliaires (35) et, en coopération, une encoche (11) formée sur chacun des leviers principaux (5).

3. Pèse-personne selon la revendication 2, dans lequel le levier auxiliaire (35) a une cavité (36) qui peut être miss en coopération dans l'encoche (11) pour maintenir le levier auxiliaire (35) en position prédéterminée sur le levier principal correspondant (5) lorsque la cavité (36) et l'encoche (11) sont en coopération mutuelle.

4. Pèse-personne selon la revendication 2, dans lequel le dispositif de fixation et le dispositif antagoniste (37, 11) sont disposes respectivement en position pratiquement centrale sur chacun des leviers principaux (5) et à une première extrémité de chacun des leviers auxiliaires (35).
